# EUROPÄISCHE PATENTSCHRIFT

(11) **EP 2 006 635 B1**
(45) Veröffentlichungstag und Bekanntmachung des Hinweises auf die Patenterteilung: **03.03.2010**
(21) Anmeldenummer: 07011890.6
(22) Anmeldetag: 18.06.2007
(51) Int. Cl.: G01C 17/02, G01C 21/20

(54) **Lawinenkundliches Kartographiebesteck**
Cartographic kit for avalanche data
Etui de cartographie des avalanches

(43) Veröffentlichungstag der Anmeldung: 24.12.2008
(73) Patentinhaber: Roller, Götz, 81476 München (DE)
(72) Erfinder: Roller, Götz, 81476 München (DE)

(56) Entgegenhaltungen:
- DE-U1- 29 609 838

## Beschreibung

Die Erfindung betrifft ein lawinenkundliches Kartographiebesteck.

Der Stand der Technik, an den hier angeknüpft wird, stellt sich wie folgt dar: Die in der Navigation gebräuchlichen Kompaßsysteme, wie sie sich auch aus den Druckschriften DE 296 09 838 U1, DE 22 33 611 B2 und DE 85 14 767 U1 ergeben, sind auf die Bestimmung von Kursen als Orientierungshilfe ausgerichtet. Sie sind überwiegend rechtsläufig und mit den Meridianen nach Geographisch Nord orientiert. Geographisches Azimut und Richtungswinkel, die beispielsweise in Altgrad (Vollkreis = 360°) oder Neugrad (Vollkreis = 400 gon) angegeben werden können, werden rechtsläufig, also im Uhrzeigersinn von Geographisch Nord oder Gittemord ausgehend gemessen. Das magnetische Azimut wird ausgehend von Magnetisch Nord ebenfalls rechtsläufig gemessen. Dieses Prinzip ist insbesondere auch bei den im Freizeitsport angewendeten Marschkompassen weit verbreitet. Bei diesen oftmals flüssigkeitsgedämpften Kompassen wird beispielsweise zur Bestimmung einer Marschrichtung die Richtungskreisscheibe bzw. das Kompaßgehäuse verdreht.

Die in der geologischen Feldarbeit gebräuchlichen Kompaßrosen sind etwas anders konzipiert, da hier die Bestimmung der Raumlage geologischer Flächen wie Schichtflächen, Klüfte oder Verschiebungsflächen im Vordergrund steht. Die mit dem Geologenkompaß entweder nach der Streichrichtungsmethode oder der Fallrichtungsmethode gemessenen Daten werden in ein sogenanntes Schmidt'sches Netz (analog: Wulff'sches Netz) übertragen, um so für konkrete, im Raum gelegene Flächen oder Lineare lageidentische Projektionen in der Ebene zu erhalten. Beim Geologenkompaß sind die steigenden Richtungswinkel und damit auch die Richtungsbezeichnungen entgegen dem Uhrzeigersinn angetragen, also linksläufig. Dies führt dazu, daß sich - in der Geographisch Nord Richtung gesehen und in Altgrad angegeben - die 90° Marke und damit die definierte Ost-Richtung auf der linken Kompaßseite (also links von der von oben nach unten in Nord-Süd-Richtung verlaufenden Achse) befindet, die 270° Marke und damit die definierte West-Richtung dagegen auf der rechten Kompaßseite. Ost und West erscheinen damit gegenüber ihrer geographischen Lage vertauscht. Die Ursache hierfür liegt im geowissenschaftlichen Anwendungsbereich: Aufgemessene geologische Flächen oder Lineare sind lagekonstant, außerdem wird der Richtungskreis bei der Messung verdreht. Die Kompaßnadel zeigt keine Himmelsrichtungen, sondern sogenannte Raumlagewerte an; bei der Fallrichtungsmethode entfällt zudem die Angabe einer geographischen Richtung, die Zahl der Angaben reduziert sich damit von drei auf zwei, was im Hinblick auf die elektronische Datenverarbeitung von Vorteil ist. Der Geologenkompaß liefert in Form der genannten Raumlagewerte allerdings Informationen, die außerhalb seines eigentlichen geowissenschaftlichen Anwendungsbereichs nicht benötigt werden. Auch deswegen ist seine Anwendung außerhalb der Geowissenschaften kaum verbreitet. Aus der Druckschrift DE 296 09 838U1 geht ein Marschkompaß hervor, welcher das altbekannte Prinzip des Geologenkompasses für die Angabe von Marschrichtungen übernimmt.

Der im Patentanspruch genannten Erfindung liegt das Problem zugrunde, daß die vom Lawinenlagebericht angegebenen, ausdifferenzierten Informationen zu lawinenkundlichen Gefahrenstellen in der geowissenschaftlichen Praxis zur Gefahrenbeurteilung insbesondere auch für den Bereich der Arbeitssicherheit bislang nur umständlich und zeitaufwendig visualisiert und beispielsweise in eine mit Höhenlinien versehene geographische Karte, die also insbesondere auch eine Luftbild-oder Laserscankarte sein kann, übertragen werden können. Grund hierfür ist, daß es im Unterschied zum Anwendungsbereich eines Navigationskompasses bei der Transformation der vom Lawinenlagebericht genannten Informationen - abstrakt gesprochen - um die Verknüpfung von Richtungswinkelangaben von auf einer gedachten horizontalen Ebene aufgebrachten Linearen (eine solche Lineare ist beispielsweise die Windrichtungsangabe des Lawinenlageberichts), die nicht als Richtungslinearen einer geneigten Fläche (eine solche Lineare ist z. B. die im Lawinenlagebericht angegebene Expositionsrichtung) betrachtet werden können, mit Richtungswinkelangaben von Richtungslinearen geneigter Flächen (also beispielsweise die Expositionsrichtungen) über Projektionsebenen unter Zuhilfenahme von Symmetrieoperationen geht. Mit den genannten konventionellen Kompaßtypen können nur durch Verwendung weiterer Hilfsmittel die vom Lawinenlagebericht angegebenen, oftmals nach Höhenlage, Exposition und Tageszeit weiter ausdifferenzierten Informationen zu lawinenkundlichen Gefahrenstellen im realen räumlichen System entlang einer Wegstrecke (vor Ort oder auf einer geographischen Karte) visualisiert werden. Auch der Geologenkompaß und damit auch die in der Druckschrift DE 296 09 838 U1 genannte Modifikation reicht in den gebräuchlichen Ausgestaltungen nicht aus, um schnell und unkompliziert lawinenkundliche Gefahrenstellen direkt erkennbar zu machen. Ein Hauptproblem dabei ist, daß in der Lawinenkunde gleichzeitig sowohl mit Blickrichtungsangaben als auch mit zur Blickrichtung spiegelverkehrten Richtungen gearbeitet wird. Erschwerend kommt hinzu, daß diese beiden Richtungsarten je nach Standort des Betrachters wechseln: Beim Aufstieg einen Hang hinauf ist die Expositionsrichtung in der Falllinie entgegen der Blickrichtung des Betrachters gerichtet, bei der Abfahrt einen Hang hinab fallen Blickrichtung und Expositionsrichtung in der Falllinie zusammen. Da beispielsweise in der Skitourenpraxis immer entschieden werden muß, ob ein in Blickrichtung liegender Hang (egal ob beim Aufstieg oder vor der Abfahrt) eine Gefahrstelle im Sinne des Lawinenlageberichts ist, müssen im Raum beide Richtungsarten (Blick- und Expositionsrichtungen) gedanklich gleichzeitig verarbeitet und darüber hinaus zueinander in Bezug gesetzt werden, wozu komplizierte gedankliche Symmetrieoperationen (Spiegelungen und Rotationen um ein Rotationszentrum) notwendig werden, wenn man versucht, dies mit den in den Druckschriften DE 296 09 838 U1, DE 22 33 611 B2 und DE 85 14 767 U1 genannten Kompaßtypen zu bewerkstelligen, die entsprechend ihrem Verwendungszweck lediglich auf die Bestimmung einer zu verfolgenden Zielrichtung, nicht aber auf die Verknüpfung von unterschiedlichen Rauminformationen, die darüber hinaus auch noch im Vergleich zur tatsächlichen Wahrnehmung spiegelverkehrt vorliegen können, ausgelegt sind. Hinzu kommt, daß die neuesten Informationen zur Lawinenlage sowie relevante meteorologische Daten meist erst am frühen Morgen des Tages erhältlich sind, an dem man sie benötigt. Die Informationen müssen dann in relativ kurzer Zeit visualisiert werden, ohne auf ein effizientes technisches Hilfsmittel, welches komplizierte gedankliche Tätigkeiten umgehen hilft, zurückgreifen zu können. Auch deshalb wird in der Praxis die vorsorgende Lawinengefahrenabschätzung insbesondere vom Nichtfachmann oftmals dem Zeitdruck und der menschlichen Ungeduld geopfert, was durchaus fatale Folgen haben kann. Aber auch im Rahmen der Projektierung von Bauten oder Verkehrsanlagen im Alpenraum ist und bleibt eine schnelle Darstellung einer stichtagsbezogenen Beurteilung der Lawinengefahr auf einer geographischen Karte unter Rückgriff auf ältere Lawinenlageberichte für viele Bearbeiter derzeit noch eine umständliche Gedankenolympiade. Mängel gibt es ebenfalls hinsichtlich einer schnellen, gezielten, transparenten und nachvollziehbaren Auswahl von Vergleichslagen für repräsentative Schneeprofile oder Rutschkeile in Abhängigkeit von den tagesaktuellen Informationen des Lawinenlageberichts sowie topographischen und meteorologischen Merkmalen. Nicht zuletzt auch deswegen ist die Aussagekraft von Schneeprofilen oder Rutschkeilen in der lawinenkundlichen Praxis nicht unumstritten. Wenn man dennoch Schneeprofilen eine relevante Aussagekraft zubilligen möchte, ist die Standortauswahl für das Schneeprofil oder den Rutschkeil nicht nur für die Skitourenplanung zur Vermeidung eines Lawinenunfalls, sondern insbesondere auch für die forensische Tätigkeit nach einem Lawinenunfall von großer Bedeutung. In diesen Fällen sollte möglichst nur wenig Zeit zwischen Unfall und Rekonstruktion der lawinenkundlichen Parameter verstreichen, da physikalisch-chemische Prozesse innerhalb einer oder zwischen mehreren Schneeschichten relativ schnell ablaufen. Mit zunehmend verstrichener Zeit zwischen Unfallzeitpunkt und Rekonstruktionszeitpunkt sowie mit unzutreffender Wahl der Vergleichslage für Schneeprofil oder Rutschkeil wächst die Gefahr, aus dem in der Rekonstruktionsphase ermittelten Schneedeckenaufbau unzutreffende Schlußfolgerungen zu ziehen, was insbesondere auch in der gerichtlichen Praxis für die Beteiligten schwerwiegende Folgen haben kann.

Die im Patentanspruch angegebene Erfindung setzt an dieser Stelle durch die angeführten Funktionsmerkmale zu einer Verbesserung an.

Im Unterschied zu den in den Druckschriften DE 296 09 838 U1, DE 22 33 611 B2 und DE 85 14 767 U1 genannten Gegenständen wird hierzu bei dem im Patentanspruch 1 genannten Gegenstand ausgehend von der Richtung 0°/360° bei der Richtungsbezeichnung Süd (S) im linksläufigen System die 270° Richtung der geographischen Richtungsbezeichnung Ost und die 90° Richtung der Richtungsbezeichnung West zugeordnet, wodurch die Verknüpfung von Blickrichtungen und den hierzu entgegengesetzten Expositionsrichtungen hergestellt wird. Dieses Referenzsystem kommt zustande, indem man ausgehend vom geographischen Referenzsystem der geographischen Karte (Gitter-Nord = geodätisch Nord), von welchem der Lawinenlagebericht ausgeht, dieses mit einer senkrecht zur Ost-West-Richtung verlaufenden Spiegelebene und einer Rotationsachse (= Symmetriezentrum; Rotationswinkel = 180°) im Zentrum des Kompaßteilkreises auflöst. Die Richtungsbezeichnungen werden über die in E-W-Richtung verlaufende Spiegelebene gespiegelt, die Richtungswinkelangaben des rechtsläufigen Systems werden erst über die Spiegelebene gespiegelt und dann zusätzlich um 180° rotiert. So entsteht aus dem üblichen rechtsläufigen Kompaßteilkreis ein Kompaßteilkreis, bei dem die Nordrichtung als Gitter-Süd eines geodätischen Koordinatensystems definiert ist, der damit automatisch für die Nordrichtung die Richtungswinkelangabe 180°, für die Südrichtung dagegen die Richtungswinkelangabe 0° erhält. Die Ostrichtung erhält die Richtungswinkelangabe 270° (weil die Spiegelebene in E-W-Richtung verläuft, die Spiegelung damit nicht zum Tragen kommt, wohl aber die Rotation; deswegen im Vergleich zum Kompaß der Druckschrift DE 296 09 838 U1 vertauschte Richtungswinkelangabe) und die Westrichtung die Richtungswinkelangabe 90°. Die Richtungswinkelangabe von auf einer gedachten horizontalen Ebene aufgebrachten Linearen (beispielsweise Windrichtungsangabe), die nicht Richtungslineare einer geneigten Fläche ist, wird auf den Rand des Kompaßkreises projiziert (polare Projektion) und fällt damit mit einem Teilstrich des Kompaßkreises zusammen, der die zur Blickrichtung entgegengesetzte Expositionsrichtung darstellt. Hinsichtlich der Windrichtungsangabe bedeutet das, daß durch die oben genannte Transformation der in der praktischen Anwendung bedeutsame Bezug zwischen einer gefährlichen Hangexposition im Sinne des Lawinenlageberichts und der im Lawinenlagebericht ebenfalls berichteten Windrichtung ohne weitere Rechenoperationen direkt visualisiert wird. Die Bedeutung dieser Anordnung läßt sich ermessen, wenn man bedenkt, daß Windrichtungsangaben sehr wichtige, wenn nicht sogar die wichtigsten Parameter für die Gefährdungsabschätzung in der Lawinenkunde darstellen: Der Wind gilt als Baumeister von Lawinen, weil sich auf der windabgewandten Seite eines Hindernisses Schneeverfrachtungen ablagern, deren Schichten untereinander nur schwach verbunden sind und bereits bei geringer Zusatzbelastung als Massenbewegung (Lawine) abgehen. So entstehen insbesondere an windabgewandten Seiten von Hindernissen Gefahrenzonen, die auch im Lawinenlagebericht mit den entsprechenden Richtungsbezeichnungen ausgewiesen sind.

Durch die mittels der Anwendung von Symmetrieoperationen erfolgte Definition der Nord-Richtung als Gitter-Süd eines geodätischen Koordinatensystems können in dem so entstandenen linksläufigen System die durch Zeiger dargestellten Gefahrensektoren und ihr Bezug zu relevanten Windrichtungen (einzelner Zeiger)/Windrichtungsschwankungen (mehrere Zeiger) sofort optisch erkennbar direkt abgeglichen werden. Ein Beispiel mag dies verdeutlichen:

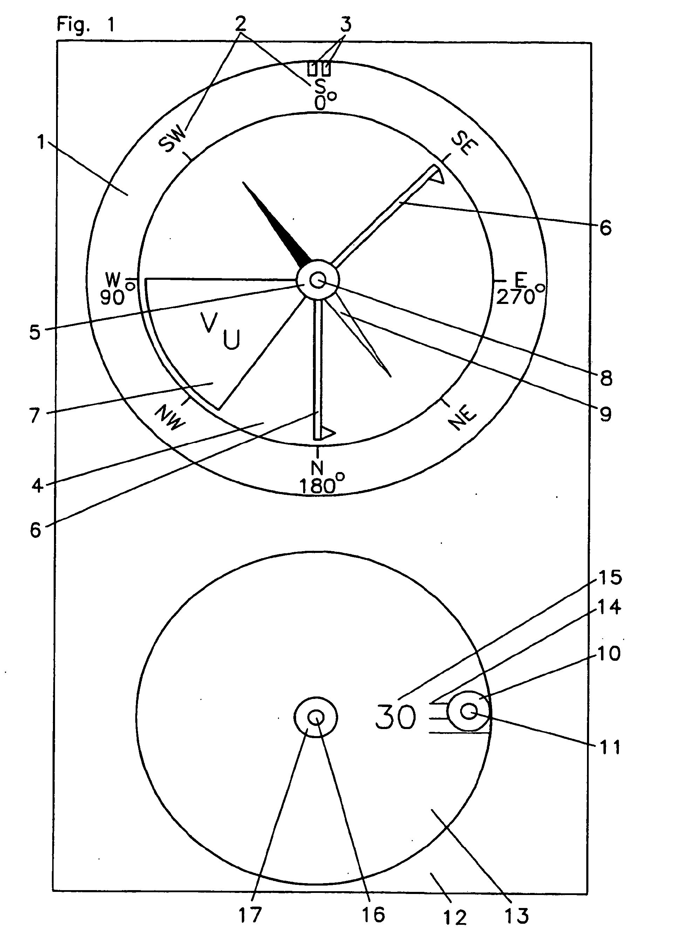

Bei einer lokal-kleinräumlichen Windströmung aus 225° liegt die windabgewandte Gefahrenzone - beim lawinenkundlichen Kompaß der Fig. 1 direkt ablesbar - im Sektor um NE (Nordost), also zwischen N = 180° und E =270°. Der Lawinenlagebericht weist als Gefahrenzone den Sektor zwischen N und SE aus. Nur durch die wie im lawinenkundlichen Kompaßsystem definierte Zuordnung von Richtungswinkeln und Richtungsbezeichnungen kann schnell überprüft werden, ob das lokale Windströmungssystem noch von den Gefahrenangaben des Lawinenlageberichts abgedeckt wird oder ob die Einstellungen der Zeiger des lawinenkundlichen Kompaß' zur Gefährdungsabschätzung korrigiert, also verstellt werden müssen. Mit den in den drei Druckschriften DE 296 09 838 U1, DE 22 33 611 B2 und DE 85 14 767 U1 genannten Kompaßsystemen ist dies nicht möglich; es reicht demnach insbesondere nicht aus, das in der Druckschrift DE 296 09 838 U1 genannte Kompaßsystem lediglich mit lawinenkundlich spezifischen Schablonen und Kreissektoren zu versehen. Anhand des oben genannten Beispiels läßt sich dies einfach nachvollziehen: Bei der genannten lokal-kleinräumlichen Windströmung aus 225° liegt die windabgewandte Gefahrenzone beim Kompaß der Druckschrift DE 296 09 838 U1 im Sektor zwischen S und W, also nicht zwischen N = 180° und E = 270° wie beim lawinenkundlichen Kompaßkreis. Ein derartiger Irrtum kann tödliche Folgen haben, wenn man sich auf diese unzutreffende Aussage des mit lawinenkundlichen Schablonen weitergebildeten Kompaß der genannten Druckschrift DE 296 09 838 U1 verläßt und nun den durch die Zeiger definierten Gefahrensektor entsprechend korrigiert.

Hinzu kommt, daß im lawinenkundlich benötigten Kompaßsystem beispielsweise im Vergleich zu dem in der Druckschrift DE 22 33 611 B2 genannten System die Zahl der lawinenkundlichen Zeiger, die zudem im Einsatz schnell gegeneinander verstellbar und austauschbar sind, nicht begrenzt ist, da wesentliche Informationen des Lawinenlageberichts zu geographisch definierten Gefahrenstellen in Abhängigkeit von der gewünschten Höhenlage, Exposition und Tageszeit angegeben werden und so eine Vielzahl von zueinander variablen thematischen Zeigern (auch in Form von Kreisbogenscheiben) gleichzeitig verwendet werden können, die diese Differenzierungen wiedergeben. Dies ist notwendig, weil sich die Gefahrenlage im Gebirge in einer vegetationsfreien Höhenlage beispielsweise oberhalb 1800 Meter Höhe ganz anders darstellen als in einer mit lückenhafter Vegetationsbedeckung versehenen Höhenlage zwischen 1200 Meter und 1600 Meter Höhe, wobei innerhalb dieser Höhenbereiche wiederum bei Windrichtungen und tageszeitbedingt (Vormittag / Nachmittag) Unterschiede auftreten können. Das in der Druckschrift DE 22 33 611 B2 genannte System ist aufgrund des speziellen technischen Aufbaus der Konstruktion (Stellscheiben) nicht dazu ausgelegt, diese Vielzahl von lawinenkundlich benötigten Differenzierungen gleichzeitig und flexibel zu bewältigen.

Die im Patentanspruch angegebene Erfindung trägt durch die zusätzliche Kombination des beschriebenen Kompaßsystems mit einem Neigungsmeßgerät in einer bestimmten geometrischen Anordnung nun zu einer weiteren Informationsverknüpfung bei. Hierzu wird ein mit tagesaktuellen Informationen eingestelltes, mechanisches oder elektronisches lawinenkundliches Kompaßsystem in einer bestimmten geometrischen Anordnung mit einem Meßgerät zur Neigungsmessung kombiniert. Die im Lawinenlagebericht angegebenen Gefahrenstellen berücksichtigen nämlich auch die Hangneigung. Wenn beispielsweise der Lawinenlagebericht davon spricht, daß Gefahrenstellen im kammnahen Steilgelände der Richtungen N bis SE zu finden sind, sind entsprechend der internationalen Gepflogenheiten damit Hanglagen gemeint, die eine steilere Hangneigung als 30° aufweisen. Dementsprechend ist es notwendig, die Hangneigung zu messen und in Bezug zu den anderen Informationen zu setzen, will man herausfinden, ob am Ort der Betrachtung eine gefährliche Hangstelle vorliegt.

Die Art und Weise wie Hangneigungen gemessen werden, ist dem Fachmann bekannt. Die Art des Neigungsmeßgeräts ist dem Fachmann ebenfalls bekannt. Im Gelände werden Neigungsmessungen beispielsweise mit einem einfachen, an einem auf der Visierlinie liegenden Punkt aufgehängten Senklot in Verbindung mit einem Winkelmesser oder mit einem elektronischen Neigungsmesser durchgeführt. Für Neigungsmessungen auf einer Karte greift der Fachmann auf einen Neigungsmaßstab zurück. Entscheidend ist dabei immer, daß der Neigungswinkel in der sogenannten Falllinie des Hanges gemessen wird. Da auf einer geographischen Karte keine schiefen Ebenen vorhanden sind, die gemessen werden könnten, ist für die lawinenkundliche Arbeit mit einer geographischen Karte kein Neigungsmesser erforderlich, sondern ein Neigungsmaßstab. Ein Neigungsmaßstab ist ein Meßwerkzeug, im Unterschied zu einem Kartenmaßstab, der ein Größenverhältnis darstellt. Mit einem Neigungsmaßstab kann man - Maßstabstreue bei Karte und Meßgerät vorausgesetzt - eine Aussage zur Neigung einer in die Kartenebene projizierten Erhebung machen, wenn diese durch Höhenlinien dargestellt ist, wie dies in topographischen Karten der Fall ist. Es entspricht dem Stand der Technik, daß aus einer topographischen Karte durch Abstandsmessungen von Höhenlinien und Vergleich des gemessenen Abstands mit einem Neigungsmaßstab bei gegebener Höhendifferenz auf den Neigungswinkel am Ort der Betrachtung geschlossen werden kann. Umgekehrt ist es möglich, mittels des Neigungsmaßstabs für einen bestimmten Neigungswinkel zu überprüfen, ob der Höhenlinienabstand auf der Karte länger (dann ist der Neigungswinkel auf der Karte und damit die Hangneigung an der betrachteten Stelle geringer/kleiner als der gewählte Neigungswinkel des Neigungsmaßstabs) oder kürzer (dann ist der Neigungswinkel auf der Karte und damit die Hangneigung an der betrachteten Stelle größer als der gewählte Neigungswinkel des Neigungsmaßstabs) ist. Genau dieses Prinzip wird beim Kartographiebesteck mit dem lawinenkundlichen Kompaßsystem verbunden, wenn mit geographischen Karten gearbeitet wird: Es wird von vorgegebenen Neigungswinkeln ausgegangen und dementsprechend mit vorgegebenen Neigungsmaßstäben für diese Winkel eine Relativabstandsmessung durchgeführt, was Berechnungen überflüssig macht. Dieser Neigungsmaßstab besteht aus mindestens zwei paarweise parallel angeordneten Neigungsmaßstabslinien oder Neigungsmaßstabspunkten mit bestimmtem Zwischenabstand oder einer Strecke mit einer bestimmten Streckenlänge. Die Neigungsmaßstabspunkte stellen nichts anderes dar als die Endpunkte einer Strecke; Neigungsmaßstabslinien sind also wiederum lediglich eine Aneinanderreihung von unendlich vielen Endpunkten der Strecke, die einen bestimmten Abstand definiert. Neigungsmaßstabslinien verlaufen senkrecht zur Visierrichtung, Neigungsmaßstabsstrecken, also die lotrechte Verbindung zwischen zwei benachbarten Neigungsmaßstabslinien, die nicht mit der Visierrichtung zusammenfallen muß, dagegen parallel zur Visierrichtung des Kompaß'. Es werden mit dem Meßgerät also nicht etwa beliebige Streckenlängen gemessen, deren Zahlenergebnisse dann rechnerisch weiterverarbeitet werden müssen, sondern Relativmessungen bezüglich der Höhenlinienabstände bei zuvor definierten topographischen Höhenunterschieden (wodurch das topographische Einzugsgebiet der Lawine definiert wird) durchgeführt. Das Relativmeßprinzip bei der Messung von Neigungswinkeln aus einer geographischen Karte beruht also auf dem maßstabstreuen Vergleich einer vorhandenen mit einer vorgegebenen Strecke. Diese Vereinfachung ist deswegen möglich, weil es in der hier angesprochenen Fragestellung nicht auf eine hochpräzise Messung und Angabe einer Vielzahl von unterschiedlichen Neigungswinkeln als Zahlenwert aus einer geographischen Karte mit ohnehin maßstabsbedingt begrenztem Auflösungsvermögen ankommt, sondern auf wenige definierte kritische Neigungswinkel, die auf die im Lawinenlagebericht beschriebene Gefahrenlage abgestimmt sind. Im wesentlichen wird dabei in der Praxis mit vier Neigungswinkeln gearbeitet: 20°, 30°, 35° und 40°, wobei die Zahlen hier als Größenordnungsangaben zu verstehen sind. Diese Zahl von vier Neigungswinkeln läßt sich im Extremfall auch auf zwei besonders kritische Neigungswinkel, nämlich 30° und 35° reduzieren, oder auch nur auf einen davon. In letzterem Fall ergeben sich für drei Einzugsgebietsgrößen von beispielsweise 20 m, 60 m und 100 m Höhendifferenz drei Neigungsmaßstäbe, also drei Strecken mit bestimmten Streckenlängen, die zum Vergleich herangezogen werden können.

Ein einfaches mechanisches Ausführungsbeispiel des Kartographiebestecks, hier mit Neigungsmaßstab und Markierinstrument, ist in der nachfolgenden Zeichnung dargestellt.

Es zeigt
- Fig. 1: Aufsicht auf das Kartographiebesteck mit lawinenkundlichem Kompaßgehäuserahmen der Fassung (1), Richtungsbezeichnungen mit Richtungswinkelangaben (2) sowie Visiereinrichtung (3); an der Oberseite der Scheibe (4) befindliche, auf die Achse (8) geschraubte Feststellmutter (5), beispielhaft Zeiger, nämlich ein Zeigerpaar mit gegenläufig gerichteten Pfeilspitzen (6) sowie eine Kreisbogenscheibe (7) mit Winkelsignatur für Rinnen (Signatur V) und Mulden (Signatur U); Magnetnadel (9); Kopf (10) des senkrecht durch eine Perforation in der Basisplatte (12) und an deren Unterseite angebrachten Scheibe (13) geführten Nagels (11); Neigungsmaßstabslinien (14) für einen bestimmten Neigungsmaßstab; Neigungswinkelangabe (15) und Scheibenachse (16) sowie Feststellmutter (17).

Das als Ausführungsbeispiel für einen Rechtshänder gewählte lawinenkundliche Kartographiebesteck umfaßt eine eigene freischwingende, nicht beeinflußte Magnetnadel (9) in einem kreisrunden, durchsichtigen, oben nach innen rechtwinklig eingeschlagenen, nicht magnetischen Gehäusezylinder als Fassung, in den eine ebenfalls kreisrunde, aus klarem, durchsichtigem Kunststoff bestehende, die Funktion eine Projektionsebene übernehmende Scheibe (4), beispielsweise in Form einer planparallelen Platte, paßgenau eingefügt ist. In den Oberflächenrand des Gehäusezylinderrahmens sind Richtungsbezeichnungen mit Richtungswinkelangaben (2) eingeprägt. Süd- und Nordrichtung sind gegenüber ihrer geographischen Lage vertauscht. Die Nordrichtung ist als Gitter-Süd eines geodätischen Koordinatengitters definiert. Ausgehend von der Richtungsbezeichnung Süd ist eine linksläufige Kompaßteilung mit (bezogen auf die normalerweise übliche Nord-Richtung) vertauschten Richtungsbezeichnungen erkennbar. Die ausdifferenzierten Informationen des Lawinenlageberichts werden - ohne daß gedankliche Transformationen notwendig wären - mittels der Zeiger (6) (auch in Form einer Kreisbogenscheibe (7)) direkt eingestellt. Am Gehäusezylinderrahmen (1) ist hier bei der Richtungsbezeichnung Süd eine Visiereinrichtung (3) aufgesetzt, welche die in der Anwendung senkrecht zu den Höhenlinien der Karte zeigende, von Nord nach Süd verlaufende Visierrichtung definiert. Lotrecht durch den Mittelpunkt der hier kreisrunden Scheibe (4) führt eine mit dieser festverbundene, stabförmige Achse (8). Sie ragt an der Oberseite und der Unterseite der Scheibe (4) aus dieser heraus und liegt in der gedachten Verlängerung der Achse, auf die die darunterliegende Magnetnadel (9) aufgesetzt ist. Die Art der Magnetnadel ist dem Fachmann bekannt. Aufsatzpunkt der Magnetnadel (9) und Mittelpunkt der Scheibe (4) liegen übereinander, ohne daß sich die durch die Scheibe führende Achse (8) und die darunterliegende Achse, auf die die Magnetnadel (9) aufgesetzt ist, berühren oder die Magnetnadel (9) in ihrer Funktion gestört wird. An der aus nicht magnetischem Material gefertigten Achse (8) sind oberhalb und unterhalb der Scheibe (4) lotrecht zur Achse (8) angeordnete, gegeneinander im Vollkreis bewegliche Zeiger (6) und eine Kreisbogenscheibe (7) aufgehängt. Die Achse (8) ist von ihrer Länge so dimensioniert, daß sie an den an der Ober- und Unterseite der Schreibe (4) herausragenden Teilen mehrere Zeiger (6) und (7) aufnehmen kann. Die Zeiger (6) und Kreisbogenscheibe (7) haben bestimmte Farben und/oder Formen, sind nicht magnetisch und enthalten an einem Ende jeweils eine auf den Achsendurchmesser abgestimmte Bohrung, die ein Auffädeln der Zeiger (6) und Kreisbogenscheibe (7) auf der Achse (8) ermöglicht. Die beispielhaft in Fig. 1 gewählte Kreisbogenscheibe (7) hat eine flache Form, besteht aus klarem, durchsichtigem Material, ist nicht magnetisch, hat die Form eines Kreisbogensegments bestimmter Kreisbogenlänge, und enthält Symbole für bestimmte geomorphologisch typische Gefahrstellen, hier beispielhaft Rinnen und Mulden, sowie an seinem spitzwinkligen Ende die auf den Achsendurchmesser abgestimmte Bohrung, die ein Auffädeln auf der Achse (8) ermöglicht. Die Zeiger (6) dienen zur direkten Einstellung der die Gefahrenzonen geographisch begrenzenden Richtungen, wie sie vom Lawinenlagebericht als Expositionen genannt werden. Die Zeiger (6) sind in Fig. 1 so eingestellt, daß sie beispielhaft die in einem fiktiven Lawinenlagebericht genannten Gefahrenstellen von Nord (N) über Ost (E) nach Südost (SE) einschließen und so den Gefahrensektor definieren. Auf die aus der Scheibe (4) herausragenden Achsenteile sind an beide Enden passende Feststellmuttern (5) aufgesetzt. Achse (8) und Feststellmuttern (5) bilden im vorliegenden Fall zusammen beispielhaft die Befestigungsvorrichtung des lawinenkundlichen Kompaßgehäuses für Zeiger (6) sowie Kreisbogenscheibe (7). Die Art der Feststellmutter ist dem Fachmann bekannt. Sie hat hier zylindrische Form und ist nicht magnetisch. Die Feststellmutter (5) ist vollständig von der Achse (8) abnehmbar und dient gleichzeitig zur Lösung und Fixierung der an der Achse (8) aufgehängten, an der Ober- bzw. Unterseite der Scheibe (4) aufliegenden Zeiger (6) und Kreisbogenscheibe (7). Durch eine geringfügige Drehung der Feststellmutter (5) wird die Fixierung gelöst und Zeiger (6) sowie Kreisbogenscheibe (7) können mit leichtem Fingerdruck verstellt werden. Dabei sind auf der Oberseite der Scheibe (4) die an der Achse (8) aufgehängten Zeiger (6) und die Kreisbogenscheibe (7) zur Richtungskorrektur schnell und unabhängig von den an der Unterseite fixierten Zeigern verstellbar.

Auf die Unterseite der Basisplatte (12), die nicht magnetisch ist und hier aus klarem, durchsichtigem Kunststoff besteht, ist eine hier kreisrunde, nicht magnetische, durchsichtige Scheibe (13) aus dünnem Kunststoff aufgelegt, die beispielhaft mit mehreren Neigungsmaßstabslinien (14) eines bestimmten Neigungsmaßstabs für einen konkreten Neigungswinkel, hier mit der Neigungswinkelangabe (15) von 30 ° angegeben, versehen ist. Die die Neigungsmaßstabslinien (14) umfassende Scheibe (13) bildet hier beispielhaft das Neigungsmeßgerät.

Da für eine direkte konkrete Gefährdungsaussage eine Verknüpfung der gemessenen Neigung mit den im Kompaßsystem eingestellten Informationen erfolgen muß, ist es erforderlich, daß das Neigungsmeßgerät geometrisch so zum Kompaß angeordnet wird, daß die Neigung parallel zur Visierlinie des Kompaß (diese verläuft von N nach S über die in Fig. 1 dargestellte Visiereinrichtung (3) bei S) gemessen wird; die Visierlinie muß also beim Meßvorgang parallel zur Falllinie des zu messenden Hanges verlaufen. Wenn - um das obige Beispiel aufzugreifen - der Lawinenlagebericht davon spricht, daß Gefahrenstellen im kammnahen Steilgelände (Hangneigung größer 30°) der Richtungen N bis SE zu finden sind und das Neigungsmeßgerät für die parallel zur Visierrichtung verlaufenden Falllinie einen Winkel von 40° ergibt und gleichzeitig die Kompaßnadel für die gleiche Visierrichtung in den durch zwei Zeiger oder einen Kreisbogen aufgespannten Sektor zwischen N und SE zeigt, dann hat man am Ort der Betrachtung, der anvisiert wird, eine Gefahrenstelle im Sinne des Lawinenlageberichts identifiziert, ohne eine einzige zusätzliche Rechenoperation oder gedankliche geometrische Transformation durchgeführt haben zu müssen, weil diese erforderlichen Operationen im System bereits berücksichtigt sind. Ein Blick auf gemessene Neigung und Relativstellung von Magnetnadel (9) zu Zeigern (6, 7) genügt.

Die Anzahl der für die mechanische Ausführung benötigten

Neigungsmaßstabslinienpaare oder Strecken zur Messung der Relativabstände wird hauptsächlich durch die Variabilität der Einzugsgebiete (definiert durch die topographischen Höhenunterschiede) und die Zahl der gewählten Neigungswinkelangaben bestimmt. Bei einer naheliegenden Ausführung für die Messung von Neigungswinkeln im Gelände umfaßt die Scheibe (13) anstelle der Neigungsmaßstabslinienpaare Neigungswinkelskalenstriche, das Senklot oder ein einzelner Zeiger (6) wird an der Scheibenachse (16) frei beweglich aufgehängt. Selbstverständlich können Neigungswinkelskalenstriche des Winkelmessers oder die Neigungsmaßstabslinien (14) auch direkt an der Basisplatte (12) angebracht werden. Mit dem auf den Kartenmaßstab abgestimmten Neigungsmaßstab, dessen Neigungsmaßstabslinienabstände bei gegebenen Höhendifferenzen für bestimmte Neigungswinkel stehen, werden also die Abstände der parallel verlaufenden Höhenlinien der unterliegenden Karte abgeglichen. Überdecken oder umfassen zwei lotrecht zur Visierrichtung verlaufende Neigungsmaßstabslinien (14) zwei parallele Höhenlinien der Karte mit definiertem Höhenabstand und zeigt gleichzeitig die Magnetnadel (9) in den zuvor definierten Gefahrensektor, handelt es sich bei der von den Neigungsmaßstabslinien (14) umschlossenen Fläche beispielsweise um eine Gefahrenstelle im Sinne des Lawinenlageberichts. Der Neigungsmaßstab funktioniert in der Anwendung also wie eine Schablone, die parallel oder senkrecht zu den Höhenlinien auf der eingenordeten geographischen Karte verschoben wird. Der Vorteil von derartigen schablonenhaften Relativmessungen ist, daß optisch wahrnehmbare Relationen wie "größer (länger) als die vorgegebene Schablone" oder "kleiner (kürzer) als die vorgegebene Schablone" leichter gedanklich weiterverarbeitet werden können als Meßwerte in Form von Zahlen.

Die Basisplatte (12) ist an ihrer Unterseite so profiliert, daß die eingelegte Scheibe (13) mit der Flächenunterseite der Basisplatte (12) bündig abschließt. Aus dem Mittelpunkt der Scheibe (13) ragt lotrecht eine hier mit der Scheibe (13) fest verbundene, aus nicht magnetischem Material bestehende Scheibenachse (16) auf, welche durch eine funktionsgerechte Perforation in der Basisplatte (12) geführt wird und an deren Oberfläche herausragt. Dem aus der Oberfläche herausragende Teil ist eine passende Feststellmutter (17) aufgesetzt und bildet im vorliegenden Fall zusammen mit der Scheibenachse (16) beispielhaft eine Befestigungsvorrichtung zum Lösen, Befestigen und Verdrehen der mit der Scheibenachse (16) verbundenen, an der Unterseite der Basisplatte (12) aufliegenden Scheibe (13). Die Art der Feststellmutter ist dem Fachmann bekannt. Sie hat hier zylindrische Form und ist nicht magnetisch. Die Feststellmutter (17) ist hier vollständig von der Scheibenachse (16) abnehmbar. Durch eine geringfügige Drehung der Feststellmutter (17) wird die Fixierung gelöst. Durch Verdrehen der Scheibe (13) kann dann für einen bestimmten mit dem Kartenmaßstab übereinstimmenden Neigungsmaßstab die gewünschte Neigungswinkelangabe (15) so eingestellt werden, daß die zugehörigen Neigungsmaßstabslinien (14) lotrecht zur Visierrichtung verlaufen. So wird das Gerät zur Messung oder auch zur Abgleichung der Höhenlinienabstände einsatzbereit. Sowohl die Basisplatte (12) als auch die Scheibe (13) sind mit funktionsgerechten Perforationen für die Führung des hier kreisrunden Markierinstruments versehen, letztere zwischen zwei Neigungsmaßstabslinien (14). Das Markierinstrument ist eine optionale Ausstattung, durch welche die Arbeitspräzision erhöht werden kann. In Fig. 1 wurde das Markierinstrument so plaziert, daß die Markierung zwischen den beiden Neigungsmaßstabslinien, also den Ort der Betrachtung, für den die lawinenkundliche Aussage gemacht wird, erfolgen kann. Die Art des Markierinstruments ist dem Fachmann bekannt. Es ist hier beispielhaft als Nagel (11) dargestellt, der an seinem aus der Oberseite herausragenden Ende einen flachen, kreisrunden Kopf (10) umfaßt und an seinem anderen Ende spitz zulaufend ist. Die Perforation in Basisplatte (12) und Scheibe (13) hat hier die Form einer kreisrunden Bohrung, deren Durchmesser auf den Durchmesser des Nagels (11) so abgestimmt ist, daß dieser präzise und gleichzeitig senkrecht leicht beweglich in der Bohrung auf- und abwärts geführt werden kann. Der Kopf (10) des Markierinstruments liegt an seiner Unterseite einer Spiralfeder (hier verdeckt) auf. Die Art der Spiralfeder ist dem Fachmann bekannt. Sie hat hier zylindrische Form, ist nicht magnetisch, sitzt beispielhaft senkrecht auf der Oberseite der Basisplatte (12) auf und ist mit dieser fest verbunden und von ihrem Durchmesser so dimensioniert, daß innerhalb der Spirale der durch die Spiralwindungen umfaßte und in die durchgehende Perforation in der Basisplatte (12) hineinragende Nagel (11) bei Ausübung einer auf den Kopf (10) wirkenden Kraft, beispielsweise durch einfachen Fingerdruck, vertikal zur Basisplatte (12) beweglich ist; die Länge der Spiralfeder ist dabei so dimensioniert, daß die am unteren Ende des Nagels (11) befindliche Spitze zumindest nicht aus der Perforation an der Unterseite der Scheibe (13) herausragt, wenn in Ruhestellung, also ohne Krafteinwirkung, der Kopf (10) des Markierinstruments auf dem oberen Ende der Spiralfeder aufliegt. So bleibt die freie horizontale Beweglichkeit des lawinenkundlichen Kartographiebestecks über die Oberfläche der unterliegenden topographischen Karte gewährleistet. Für Messungen im Gelände kann das Markierinstrument entfernt werden.

Die Funktionsweise des so konzipierten Bestecks ergibt sich aus folgenden Ausführungen: Bei einem bestimmten Kartenmaßstab wird für einen bestimmten Neigungswinkel von beispielsweise 30°, der in der Praxis einer Gefahrenstufe der im Lawinenlagebericht verwendeten internationalen Gefahrenskala zugeordnet werden kann, und einen bestimmten topographischen Höhenunterschied von beispielsweise 100 m durch die Wahl des zugehörigen Neigungsmaßstabs der Höhenlinienabstand für diesen zugehörigen Neigungswinkel definiert. Dieser mit dem Neigungsmaßstab also festgeschriebene Abstand dient zur relativen Abstandsmessung. Mittels dem mit dem Kartenmaßstab der verwendeten Karte übereinstimmenden Neigungsmaßstab werden nun mit der zu der von Kompaß- Nord nach Kompaß- Süd verlaufenden Visierlinie parallel verlaufenden Abstandsstrecke zwischen den beiden zueinander parallel verlaufenden, lotrecht zur Visierrichtung angeordneten Neigungsmaßstabslinien (14) Relativmessungen von Höhenlinienabständen des vorgegebenen topographischen Höhenunterschieds des Einzugsgebiets von 100 m auf der geographischen Karte durchgeführt, wobei sich die Aussage auf einen Standort bezieht, der von zwei Neigungsmaßstabslinien (14) des Neigungsmaßstabs für die ausgewählte Neigungswinkelangabe (15) eingeschlossen wird beziehungsweise der auf der so definierten Meßstrecke parallel zur Visierrichtung liegt. Der Anwender, der nun senkrecht oder parallel zu den Höhenlinien der Karte eine bestimmte Region auf der Karte flächenhaft nach Gefahrenstellen absucht, vergleicht in einem ersten Schritt an jeder betrachteten Stelle zunächst nur, ob der Höhenlinienabstand der Karte größer oder kleiner als der Abstand der Neigungsmaßstabslinien (14) (anders ausgedrückt: länger oder kürzer als die lotrecht dazu verlaufende Meßstrecke) ist. In einem zweiten Schritt betrachtet der Anwender die relative Lage der Magnetnadel (9) beispielsweise zu dem durch die beiden Zeiger (6) in Fig. 1 aufgespannten Gefahrensektor. Aus diesen beiden Informationen werden direkt die wesentlichen Schlußfolgerungen zur Gefahrensituation am Ort der Beurteilung gezogen: Ist der Höhenlinienabstand an einem betrachteten Ort der Karte kleiner und zeigt die Magnetnadel (9) in einen zuvor am Kompaß eingestellten lawinenkundlichen Gefahrensektor, handelt es sich um eine Gefahrenstelle (im Sinne des Lawinenlageberichts bei gegebener Gefahrenstufe beispielsweise der internationalen fünfstufigen Gefahrenskala). Ist der Höhenlinienabstand an einem betrachteten Ort der Karte kleiner als der Abstand der Neigungsmaßstabslinien (14), zeigt die Magnetnadel (9) aber nicht in einen zuvor eingestellten lawinenkundlichen Gefahrensektor, handelt es sich auch nicht um eine Gefahrenstelle im Sinne des Lawinenlageberichts, obwohl der Hang steiler ist als der im Neigungsmaßstab festgehaltene Grenzneigungswinkel zuläßt. Ist der Höhenlinienabstand an einem betrachteten Ort der Karte größer und zeigt die Magnetnadel (9) in einen zuvor durch die zwei Zeiger (6) in Fig. 1 aufgespannten Sektor, so handelt es sich zwar um eine gefährliche Exposition, deren Gefährlichkeit sich aber durch die geringere Hangneigung relativiert.

So können dann diejenigen Orte auf der geographischen Karte ermittelt werden, an denen die Hangneigung unter den vom Lawinenlagebericht angegebenen Bedingungen kritisch für die Auslösung eines Schneebretts oder einen Lawinenstrich ist; die Stelle wird gegebenenfalls gleichzeitig mit einem funktionsgerechten Markierinstrument präzise markiert.

Durch die Kombination von Neigungsmeßgerät und lawinenkundlichem Kompaßsystem kann damit auch der Nichtfachmann parallel oder auch senkrecht zu einer definierten Wegstrecke an jedem beliebigen Punkt zu jeder beliebigen Zeit die einfache, schnelle und direkte Identifizierung von lawinenkundlich gefährlichen Hangexpositionen gemäß den aktuellen Informationen des Lawinenlageberichts vornehmen. Mit wenigen Handgriffen können wesentliche Informationen des Lawinenlageberichts zu geographisch definierten Gefahrenstellen in Abhängigkeit von der gewünschten Höhenlage, Exposition und Tageszeit in das System eingearbeitet und jederzeit einer neuen Informationslage angepaßt werden. Komplizierte und zahlreiche gedankliche Zwischen- bzw. Verknüpfungsschritte werden durch den kombinierten Einsatz der genannten technischen Merkmale vom lawinenkundlichen Kartographiebesteck übernommen. Für den so entlasteten Anwender reduziert sich die Tätigkeit bei der hier beispielhaft vorgestellten mechanischen Version ohne Bildschirm auf die Einstellung von Zeiger (6,7) und Neigungsmeßgerät (13,14), einen einfachen Blick auf Magnetnadel (9) sowie bei der Kartenbearbeitung gegebenenfalls auf die Betätigung des Markierinstrumentes durch Fingerdruck.

Ein weiterer großer Vorteil des lawinenkundlichen Kartographiebestecks besteht darin, daß wesentliche Bestandteile wie Zeiger oder Kreisbögen, Neigungsmeßgerät und Markierinstrument beliebig kombiniert und durch leichte Austausch- und Verstellbarkeit auch dem Nichtfachmann für unterschiedliche lawinenkundliche Fragestellungen eine flexible, bedarfsgerechte und auf individuelle Ansprüche zugeschnittene Ausgestaltung des Systems ermöglichen. Das lawinenkundliche Kartographiebesteck hat dementsprechend einen sehr weitgefaßten Anwendungsbereich im Zusammenhang mit lawinenkundlichen Fragestellungen, insbesondere im Bereich der öffentlichrechtlichen Gefahrenabwehr, der Arbeitssicherheit, der forensischen Tätigkeit oder im Freizeitsport.

## Patentansprüche

1. Kartographiebesteck, insbesondere zur lawinenkundlichen Bearbeitung geographischer Karten,
**dadurch gekennzeichnet, daß** es einen Kompaß, bei dessen Kompaßkreis die jeweils entgegengesetzt liegenden Richtungsbezeichnungen (2) Nord und Süd gegenüber ihrer geographischen Lage vertauscht sind und dessen Kompaßteilung ausgehend von der Richtungsbezeichnung Süd linksläufig ist, mindestens zwei um den Kompaßkreismittelpunkt bewegliche Zeiger (6,7) und gegebenenfalls mindestens ein zur über die Richtungsangabe (2) Süd verlaufenden Visierrichtung in bestimmter Geometrie angeordnetes Neigungsmeßgerät (13,14), das für eine bestimmte Neigungswinkelangabe (15) ein auf den Kartenmaßstab und einen bestimmten topographischen Höhenunterschied einer geographischen Karte abgestimmter Neigungsmaßstab (14) zur Relativmessung von Höhenlinienabständen gleicher bestimmter topographischer Höhenunterschiede auf einer geographischen Karte parallel zur Visierrichtung sein kann, sowie gegebenenfalls mindestens ein Markierinstrument (10,11), das ein Farbstift sein kann, umfaßt.

## Claims

1. Cartographic instrument, particularly for processing geographical maps according to avalanche theory,
**characterised in that** it comprises a compass, the direction indicators (2) for north and south of the compass face thereof being reversed with respect to the geographical position of said indicators, and the compass divisions thereof being arranged anticlockwise starting from the direction indicator for south, at least two pointers (6, 7) that can be moved about the centre of the compass face, and optionally at least one inclinometer (13, 14) in a specific geometric arrangement relative to the sighting direction aligned with the direction indicator (2) for south that can be an inclination scale (14) adjusted to match the scale of the map and a particular topographical height difference of a geographical map for a specific angle of inclination (15), for relatively measuring contour line spacings having the same particular topographical height differences on a geographical map parallel to the sighting direction, and optionally at least one marking instrument (10, 11) that can be a coloured pencil.

## Revendications

1. Ensemble d'instrumentation de cartographie destiné en particulier au traitement de cartes géographiques pour l'étude des avalanches,
**caractérisé en ce qu'**il comprend
- une boussole dont les points cardinaux opposés (2) nord et sud du cadran sont permutés par rapport à leur position géographique et dont la graduation est établie en sens antihoraire à partir du point cardinal sud,
- au moins deux aiguilles (6, 7) mobiles autour du centre du cadran de la boussole, et,
- le cas échéant, au moins un éclimètre (13, 14) agencé selon une géométrie déterminée par rapport à la direction de visée vers le point cardinal sud (2), lequel, pour une indication d'angle d'inclinaison (15) déterminée, peut être une échelle d'inclinaison (14) étalonnée en fonction de l'échelle de la carte et d'une dénivelée topographique déterminée d'une carte géographique pour la mesure relative, sur une carte géographique, de distances entre des courbes de niveau de dénivelées topographiques déterminées égales, parallèlement à la direction de visée, ainsi que,
- le cas échéant, au moins un instrument de marquage (10, 11), lequel peut être un crayon de couleur.
